# EUROPÄISCHE PATENTSCHRIFT

(11) **EP 2 203 101 B1**
(45) Veröffentlichungstag und Bekanntmachung des Hinweises auf die Patenterteilung: **15.07.2015**
(21) Anmeldenummer: 08803515.9
(22) Anmeldetag: 02.09.2008
(51) Int. Cl.: B60B 33/00, A47L 9/00

(54) **FAHRBARER STAUBSAUGER SOWIE LENKROLLE EINES FAHRBAREN STAUBSAUGERS**
WHEELED VACUUM CLEANER, AND CASTER FOR A WHEELED VACUUM CLEANER
ASPIRATEUR TRAÎNEAU ET ROULETTE DIRECTRICE D'UN ASPIRATEUR TRAÎNEAU

(30) Priorität: 13.09.2007 DE 102007043725
(43) Veröffentlichungstag der Anmeldung: 07.07.2010
(73) Patentinhaber: BSH Hausgeräte GmbH, 81739 München (DE)
(72) Erfinder: EBERT, Stefan, 97618 Wollbach (DE); HAUPTLORENZ, Carsten, 07318 Wittgendorf (DE); SCHWALME, Georg, 91413 Neustadt/Aisch (DE); WALTER, Philipp, 82393 Iffeldorf (DE)
(86) Internationale Anmeldenummer: PCT/EP2008/061543
(87) Internationale Veröffentlichungsnummer: WO 2009/037105

(56) Entgegenhaltungen:
- WO-A-2008/041956
- CA-A1- 2 588 032
- DE-A1- 2 153 324
- DE-A1- 2 824 033
- DE-A1- 10 256 626
- DE-U1- 9 209 250
- JP-A- 3 251 220
- US-A- 4 852 208

## Beschreibung

Die Erfindung betrifft einen fahrbaren Staubsauger sowie eine Lenkrolle eines fahrbaren Staubsaugers nach den Oberbegriffen der unabhängigen Ansprüche.

Bodenstaubsauger bestehen im Wesentlichen aus einem Basiskörper zur Aufnahme von insbesondere mechanischen und elektrischen Komponenten und einem an das Gehäuse angeschlossenen Saugschlauch, an den ein Teleskoprohr bzw. eine Saugdüse ankoppelbar ist. Beim Betrieb des Staubsaugers hält der Anwender das Teleskoprohr im Allgemeinen an einem zugehörigen Handgriff, wodurch er die Saugdüse über die zu reinigende Oberfläche führen kann. Fahrbare Staubsauger werden üblicherweise durch Ziehen am Saugschlauch bedient, wobei der Bediener das auf wenigstens einer Lenkrolle gelagerte Gerät hinter sich herzieht. Üblicherweise sind zwei Lenkrollen vorgesehen, die im Heckbereich des Staubsaugers angeordnet sind. Es können jedoch auch zusätzliche Lenkrollen im Frontbereich vorgesehen ein.

Die Lenkrollen umfassen üblicherweise ein kugeliges oder bombiertes Lenkrollengehäuse und eine Laufrolle, die um eine im Wesentlichen horizontale Achse drehbar an dem Lenkrollengehäuse gelagert ist. Das Lenkrollengehäuse ist meist mit Hilfe eines Lagerzapfens um eine im Wesentlichen vertikale Achse schwenkbar bzw. drehbar am Staubsauger gelagert. Dadurch sind die Lenkrollen zwar lenkfähig. Diese Lenkfähigkeit ist jedoch insbesondere dann eingeschränkt, wenn Hindernisse wie z.B. Türschwellen und dgl. überwunden werden sollen. Außerdem produzieren die meist aus einem Kunststoff wie beispielsweise einem Polypropxylen (PP) gefertigten Laufrollen, die an einem Kunststoff- oder Metallzapfen gelagert sind, störende Laufgeräusche. Die Laufrolle selbst ist meist aus thermoplastischen Elastomeren (TPE) gefertigt. Die Laufrolle wird meist über eine angespritzte Kunststoffachse oder über einen separaten Metallstift, der als Lagerstelle dient, in dem Gehäuse der Lenkrolle axial beweglich gelagert. Dabei kann die Laufrolle mit ihren Flanken die Aussparung in der Lenkrolle berühren, was zu einer nachteiligen Geräuschentwicklung führt.

Aus der DE 28 24 033 A1 ist ein Staubsauger mit einer festen Gleitkufe an der Unterseite und einer innerhalb dieser um eine vertikale Achse schwenkbar gelagerten separaten Laufrolle bekannt, bei dem die Gleitkufe mit der Laufrolle zu einer Baueinheit zusammengefasst ist, wobei die Laufrolle in der Gleitkufe und die Gleitkufe schwenkbar um die vertikale Achse gelagert ist. Die Gleitkufe ist dabei als Trägerelement für die Laufrolle kreisrund ausgebildet und mit einer angeformten Auflaufschräge versehen, die annähernd mit der Lauffläche der Laufrolle tangiert.

Ähnliche Anordnungen sind auch aus den Druckschriften US 4,852,208 und JP 03251220 A bekannt.

Aus der DE 2 153 324 A1 ist eine schwenkbare Laufrolle mit einer senkrechten Schwenkachse bekannt, die in einem als Schwenkarm dienenden Lagergehäuse für die Laufrolle mit waggerechtem Abstand von der Rollendrehachse gelagert ist. Das Lagergehäuse ist dabei als die Laufrolle bis etwa in Drehachsenhöhe umschließendes Kunststoffgehäuse ausgebildet. Die Schwenkachse ist in einem verstärkten Bereich einer Gehäusedeckwand mittels eines zweireihigen Radialkugellagers gelagert, dessen Außenring von dem verstärkten Bereich der Gehäusedeckwand gebildet ist.

Aufgabe der Erfindung ist es, einen gattungsgemäßen Staubsauger sowie Lenkrollen eines fahrbaren Staubsaugers bereitzustellen, die eine hohe Manövrierfähigkeit bei einem möglichst geringen Laufgeräusch ermöglichen.

Diese Aufgabe wird erfindungsgemäß mit den Merkmalen der unabhängigen Ansprüche gelöst.

Ein erfindungsgemäßer fahrbarer Staubsauger geht aus von einem Basiskörper, an dessen Unterseite mit einer Grundfläche mindestens eine Lenkrolle in einem Rollenbereich angeordnet ist, wobei die Lenkrolle eine in einem Lenkrollengehäuse außermittig an einem Umfangsabschnitt angeordnete Laufrolle umfasst, die um eine im Wesentlichen horizontale Achse drehbar an dem Lenkrollengehäuse gelagert ist, und wobei das Lenkrollengehäuse um eine im Wesentlichen vertikale Achse schwenkbar bzw. drehbar am Staubsauger gelagert ist und an jenem Umfangsabschnitt, an dem die Laufrolle angeordnet ist, die größte axiale Höhe aufweist. Es wird vorgeschlagen, dass das Lenkrollengehäuse aus einem Metall gefertigt ist und dass axial in dem Lenkrollengehäuse eine separate Buchse zur Übertragung von Kräften in den Raumachsen angeordnet ist, welche aus einem Kunststoff gefertigt ist. Eine erfindungsgemäße Lenkrolle eines fahrbaren Staubsaugers umfasst ein solches Lenkrollengehäuse mit einer separaten Buchse und einer Laufrolle.

Durch die außermittige Anordnung der Laufrolle wird eine definierte Schwenkbewegung der Lenkrolle beim Bewegen des Staubsaugers ermöglicht. Vorteilhafterweise entsteht mit der vorgeschlagenen geometrischen Gestaltung ein definierter Drehpunkt am Lenkrollengehäuse, was das Überfahren von Hindernissen wie beispielsweise von Türschwellen oder Zuleitungskabeln erheblich erleichtert.

Bevorzugt weist das Lenkrollengehäuse einen im Wesentlichen kreisförmigen Querschnitt auf, wobei die Laufrolle umfangsnah angeordnet ist. Das Lenkrollengehäuse steht bei einer bevorzugten Ausführungsform keilförmig über die Grundfläche im Rollenbereich des Basiskörpers über und bildet mit seinem aus dem Basiskörper herausragenden Bereich eine schiefe Ebene, die um etwa 20 bis 30° gegen die Grundfläche des Basiskörpers im Bereich des Lenkrollengehäuses geneigt ist. In einer besonders bevorzugten Ausführungsform beträgt die Neigung 25°. Beim Überfahren von Hindernissen gleitet das Hindernis zunächst sanft entlang der schiefen Ebene von dem grundflächennahen Bereich des Lenkrollengehäuses bis zur Keilspitze, wo das Laufrad angeordnet ist. Eine harte Kollision mit Hindernissen wird dabei verhindert, was den Verschleiß der Lenkrolle günstigerweise erheblich reduziert. Hinzu kommt, dass bei der vorgeschlagenen Anordnung des Laufrades eine besonders günstige Bodenfreiheit erzielt wird.

In einer einfacheren Ausführungsform wäre auch denkbar, dass das Lenkrollengehäuse kugelig bzw. bombiert ausgebildet ist, wobei die Lenkrolle außermittig an einem Umfangsabschnitt des Lenkrollengehäuses gelagert ist, der axial erhöht ist.

Erfindungsgemäß ist axial in dem Lenkrollengehäuse eine separate Buchse zur Übertragung von Kräften in den Raumachsen eingesetzt. Günstigerweise ist die Verbindung zwischen Buchse und Lenkrollengehäuse so gestaltet, dass Kräfte in den Raumachsen übertragen werden können, beispielsweise über Klemmung, Klebung oder Verstemmung. Günstigerweise ist die Buchse somit kraftschlüssig mit dem Lenkrollengehäuse verbunden. Die Buchse ist erfindungsgemäß aus Kunststoff gefertigt und in das Lenkrollengehäuse bevorzugt eingepresst oder verstemmt. Das Lenkrollengehäuse ist erfindungsgemäß aus einem Metall gefertigt, besonders bevorzugt aus einem Zinkdruckguss, was eine vorteilhafte Masseerhöhung mit sich bringt.

Die Buchse ist entlang einer vertikalen Achse über einen Lagerzapfen mit dem Basiskörper des Staubsaugers verbunden, wobei eine Materialpaarung der Buchse zu dem Lagerzapfen so ausgelegt ist, dass eine Reibung reduzierbar ist. Dadurch wird vorteilhafterweise eine sehr leichte und geräuscharme Drehung von der Lenkrolle erreicht. Hinzu kommt, dass fertigungstechnische Toleranzen reduziert werden.

Bevorzugt ist die Laufrolle mit Abstandselementen in einer Aussparung des Lenkrollengehäuses angeordnet, wobei die Abstandselemente bevorzugt axial jeweils auf der Außenseite der Laufrolle angeordnet sind. Günstigerweise sind die Abstandselemente als Beilagenscheiben aus Kunststoff ausgebildet, die verhindern, dass die Laufrolle das Lenkrollengehäuse berührt. In einer günstigen Variante können die Abstandselemente auch als Tellerfeder ausgebildet sein, so dass die Laufrolle immer annähernd symmetrisch in der Aussparung des Lenkrollengehäuses angeordnet ist, was günstige Auswirkungen auf das Laufverhalten hat. Die Rotation um den Führungszapfen wird durch die eingeengten Toleranzen verbessert, wodurch das Drehgeräusch minimiert wird, so dass es kaum noch hörbar ist.

In Verbindung mit der Masseerhöhung an der Lenkrolle dreht sich diese günstigerweise wesentlich länger als bei einer Ausführung aus Kunststoff. Gleichzeitig wird dem Gerät eine höherwertige Ausführung verliehen. Das Nachlaufverhalten von Bodenstaubsaugern wird damit erheblich verbessert, wodurch das Gerät dem Kunden besser durch die Räume folgt und auch an Hindernissen wie beispielsweise Möbelkanten oder Stuhlbeinen besser abrollt. Die vorgeschlagene Lösung zeichnet sich durch eine hohe Manövrierfähigkeit bei einer gleichzeitig günstigen Fahrstabilität aus.

Anhand eines in der Zeichnung dargestellten Ausführungsbeispiels wird die Erfindung nachfolgend näher beschrieben. Es zeigt:
- Fig. 1a,1b: eine bevorzugten Ausführungsform einer Lenkrolle eines fahrbaren Staubsaugers in einer Seitenansicht (Fig. 1 a) sowie in einer Schnittdarstellung (Fig. 1 b);
- Fig. 2a, 2b: eine perspektivische Detailansicht eines bevorzugten Lenkrollengehäuses (Fig. 2a) sowie eine perspektivische Darstellung des Lenkrollengehäuses mit montierter Laufrolle sowie mit einem Lagerzapfen (Fig. 2b);
- Fig. 3: eine perspektivische Ansicht einer bevorzugten Buchse eines Lenkrollengehäuses; und
- Fig. 4: eine Schnittdarstellung eines Basiskörpers eines fahrbaren Staubsaugers mit montierter Lenkrolle.

In den Figuren werden gleiche oder im Wesentlichen gleich bleibende Elemente mit den gleichen Bezugszeichen versehen.

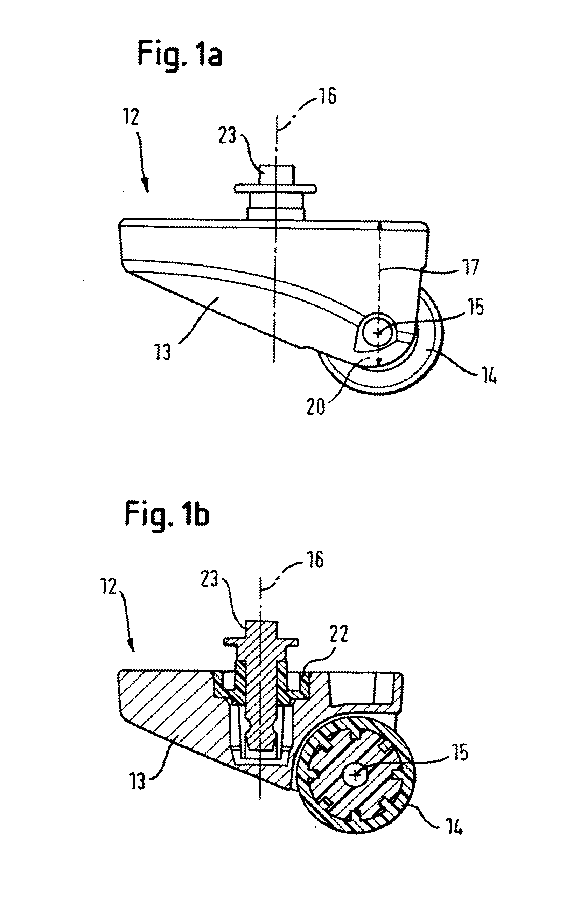

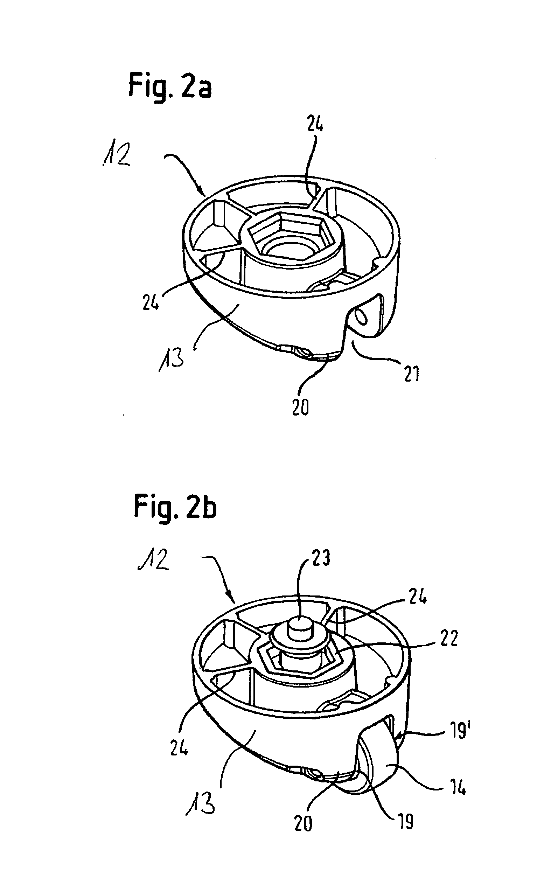

Fig. 1 a zeigt eine Seitenansicht einer bevorzugten Ausführungsform einer Lenkrolle 12 eines nicht gezeigten fahrbaren Staubsaugers, Fig. 2b zeigt die Lenkrolle 12 in einer Schnittdarstellung. Die Lenkrolle 12 umfasst ein Lenkrollengehäuse 13 sowie eine Laufrolle 14, die außermittig an einem Umfangsabschnitt 20 des Lenkrollengehäuses 13 angeordnet ist. Die Laufrolle 14 ist um eine im Wesentlichen horizontale Achse 15 drehbar an dem Lenkrollengehäuse 13 gelagert. Das Lenkrollengehäuse 13 ist um eine im Wesentlichen vertikale Achse 16 schwenkbar bzw. drehbar an einem nicht dargestellten Basiskörper 10 des Staubsaugers gelagert. Das Lenkrollengehäuse 13 weist an jenem Umfangsabschnitt 20, an dem die Laufrolle 14 angeordnet ist, die größte axiale Höhe 17 auf. Im Querschnitt ist das Lenkrollengehäuse 13 somit keilförmig ausgebildet, wobei die Laufrolle 14 im Bereich der Keilspitze gelagert ist.

In Fig. 2a ist eine perspektivische Detailansicht des Lenkrollengehäuses 13 dargestellt. Das Lenkrollengehäuse 13 weist einen im Wesentlichen kreisförmigen Querschnitt auf, wobei umfangsnah an einem Umfang des Lenkrollengehäuses 13 die Laufrolle 14 angeordnet ist. Axial in dem Lenkrollengehäuse 13 ist eine separate Buchse 22 zur Übertragung von Kräften in den Raumachsen angeordnet. Die Buchse 22 ist kraftschlüssig mit dem Lenkrollengehäuse 13 verbunden. Die Buchse 22 ist aus Kunststoff gefertigt und vorzugsweise in das Lenkrollengehäuse 13 verstemmt oder geklemmt. Das Lenkrollengehäuse 13 ist bevorzugt aus einem Zinkdruckguss gefertigt und weist auf einer der beiden Stirnseiten radial verlaufende Verstärkungsrippen 24 auf. Durch die Verstärkungsrippen 24 erhält das Lenkrollengehäuse 13 an seiner Wand eine höhere Stabilität auf.

In einem Umfangsabschnitt 20 des Lenkrollengehäuses 13 ist eine Aussparung 21 für die in Fig. 2b dargestellte Laufrolle 14 vorgesehen. Die Laufrolle 14 ist auf einem entlang der horizontalen Achse 15 angeordneten Bolzen gelagert und innerhalb des Lenkradgehäuses 13 radial ausgerichtet. Um zu verhindern, dass die Laufrolle 14 beim Bewegen des Staubsaugers das Lenkrollengehäuse 13 im Bereich der Aussparung 21 kontaktiert, was zu störenden Laufgeräuschen und zu einer Einschränkung der Lauffreiheit führen könnte, sind Abstandselemente 19, 19' in Form von Beilagescheiben angeordnet. Die Laufrolle 14 ist aus einem abriebfesten Kunststoff gefertigt und weist auf ihrer Lauffläche eine ballige Kontur auf, um die Elastizität der Laufrolle 14 zu unterstützen.

Zur Montage der Lenkrolle 12 an dem Basiskörper 10 ist in die Buchse 22 ein Lagerzapfen 23 einführbar (Fig. 2b).

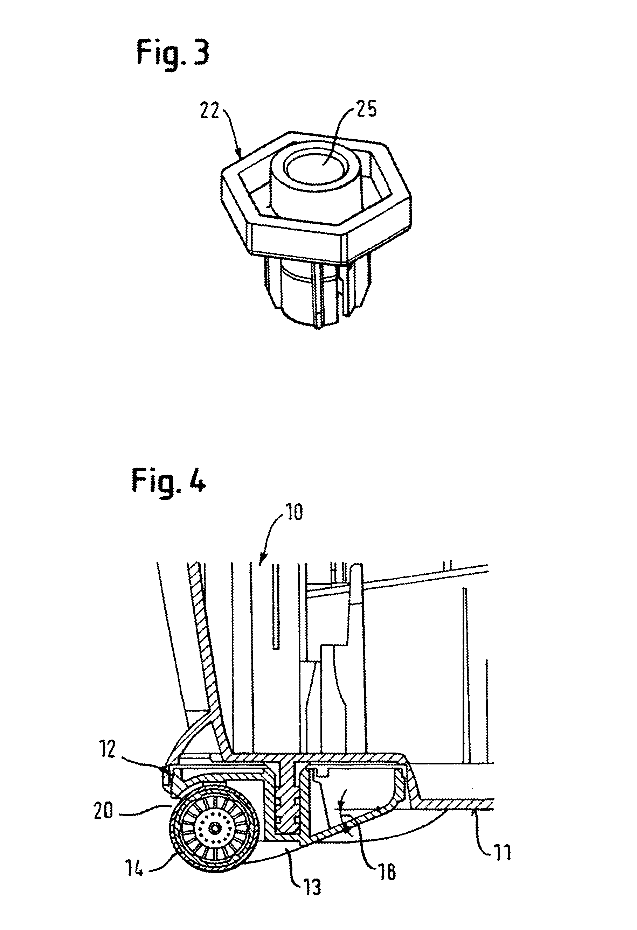

Fig. 3 zeigt eine Detailansicht einer bevorzugten Ausführungsform einer Buchse 22 aus Kunststoff mit einer hexagonalen Außenkontur. Die Buchse 22 weist axial eine Aufnahme 25 für den nicht dargestellten Lagerzapfen 23 auf.

In Fig. 4 ist eine Schnittdarstellung eines Basiskörpers 10 eines fahrbaren Staubsaugers mit einer bevorzugten Lenkrolle 12 dargestellt, wobei die Lenkrolle 12 im Heckbereich des Staubsaugers vorgesehen ist. Insbesondere sind zwei symmetrisch angeordnete Lenkrollen 12 vorgesehen. Die Lenkrolle 12 steht mit ihrem Lenkrollengehäuse 13 keilförmig über die Grundfläche 11 im Rollenbereich des Basiskörpers 10 über. Im Gebrauchszustand bildet das Lenkrollengehäuse 13 mit seinem bodennahen Bereich eine schiefe Ebene, die um einen Winkel 18 von bevorzugt 25° gegen die Grundfläche 11 des Basiskörpers 10 geneigt ist.

In dem Umfangsabschnitt 20, an dem die Laufrolle 14 angeordnet ist, weist das Lenkrollengehäuse 13 die größte axiale Höhe 17 (sh. Fig. 1a) auf. Die axiale Höhe 17 ist so ausgelegt, dass sie mit einem Durchmesser der Laufrolle 14 korrespondiert, um ein ungehindertes Laufen der Laufrolle 14 zu ermöglichen. In dem dem Umfangsabschnitt 20 gegenüberliegenden Abschnitt fluchtet das Lenkrollengehäuse 13 mit der Grundfläche 11 des Basiskörpers 10.

### Bezugszeichenliste

- 10: Basiskörper
- 11: Grundfläche
- 12: Lenkrolle
- 13: Lenkrollengehäuse
- 14: Laufrolle
- 15: Horizontale Achse
- 16: Vertikale Achse
- 17: Axiale Höhe
- 18: Winkel
- 19, 19': Abstandselement
- 20: Umfangsabschnitt
- 21: Aussparung
- 22: Buchse
- 23: Lagerzapfen
- 24: Verstärkungsrippen
- 25: Aufnahme

## Patentansprüche

1. Lenkrolle eines fahrbaren Staubsaugers mit einem Lenkrollengehäuse (13) und einer in dem Lenkrollengehäuse (13) außermittig an einem Umfangsabschnitt (20) angeordneten Laufrolle (14), wobei die Laufrolle (14) axial drehbar an dem Lenkrollengehäuse (13) gelagert ist und das Lenkrollengehäuse (13) an jenem Umfangsabschnitt (20), an dem die Laufrolle (14) angeordnet ist, die größte axiale Höhe (17) aufweist, **dadurch gekennzeichnet, dass** das Lenkrollengehäuse (13) aus einem Metall gefertigt ist und dass axial in dem Lenkrollengehäuse (13) eine separate Buchse (22) zur Übertragung von Kräften in den Raumachsen angeordnet ist, welche aus einem Kunststoff gefertigt ist.

2. Lenkrolle nach Anspruch 1, **dadurch gekennzeichnet, dass** das Lenkrollengehäuse (13) keilförmig ausgebildet ist.

3. Lenkrolle nach Anspruch 1 oder 2, **dadurch gekennzeichnet, dass** die Laufrolle (14) im Bereich der Keilspitze gelagert ist.

4. Fahrbarer Staubsauger mit einem Basiskörper (10), an dessen Unterseite mit einer Grundfläche (11) mindestens eine Lenkrolle (12) nach einem der vorangehenden Ansprüche in einem Rollenbereich angeordnet ist, , wobei die Laufrolle um eine im Wesentlichen horizontale Achse (15) drehbar an dem Lenkrollengehäuse (13) gelagert ist, und wobei das Lenkrollengehäuse (13) um eine im Wesentlichen vertikale Achse (16) schwenkbar bzw. drehbar am Basiskörper (10) gelagert ist.

5. Fahrbarer Staubsauger nach Anspruch 4, **dadurch gekennzeichnet, dass** das Lenkrollengehäuse (13) einen im Wesentlichen kreisförmigen Querschnitt aufweist.

6. Fahrbarer Staubsauger nach Anspruch 4 oder 5, **dadurch gekennzeichnet, dass** die Laufrolle (14) umfangsnah an einem Umfang des Lenkrollengehäuses (13) angeordnet ist.

7. Fahrbarer Staubsauger nach einem der Ansprüche 4 bis 6, **dadurch gekennzeichnet, dass** das Lenkrollengehäuse (13) keilförmig über die Grundfläche (11) im Rollenbereich des Basiskörpers (10) übersteht.

8. Fahrbarer Staubsauger nach einem der Ansprüche 4 bis 7, **dadurch gekennzeichnet, dass** das Lenkrollengehäuse (13) im Gebrauchszustand mit seinem bodennahen Bereich eine schiefe Ebene bildet, die um einen Winkel (18) von etwa 20 bis 30°, insbesondere um 25°, gegen die Grundfläche (11) des Basiskörpers (10) im Rollenbereich geneigt ist.

9. Fahrbarer Staubsauger nach einem der Ansprüche 4 bis 8, **dadurch gekennzeichnet, dass** die Laufrolle (14) mit Abstandselementen (19, 19') in einer Aussparung (21) des Lenkrollengehäuses (13) angeordnet ist.

10. Fahrbarer Staubsauger nach Anspruch einem der Ansprüche 4 bis 9, **dadurch gekennzeichnet, dass** die Buchse (22) kraftschlüssig mit dem Lenkrollengehäuse (13) verbunden ist.

11. Fahrbarer Staubsauger nach einem der Ansprüche 4 bis 10, **dadurch gekennzeichnet, dass** die Buchse (22) über einen Lagerzapfen (23) mit dem Basiskörper (10) verbunden ist, wobei eine Materialpaarung der Buchse (22) zu dem Lagerzapfen (23) so ausgelegt ist, dass eine Reibung reduzierbar ist.

## Claims

1. Caster of a wheeled vacuum cleaner with a caster housing (13) and a wheel (14) disposed in the caster housing (13) off-centre on a circumferential section (20), wherein the wheel (14) is supported axially-rotatable on the caster housing (13) and the caster housing (13), at that circumferential section (20), at which the wheel (14) is disposed, has the greatest axial height (17), **characterised in that** the caster housing (13) is made of a metal and that a separate bush (22), which is made of plastic, for transmission of forces into the spatial axes, is disposed axially in the caster housing (13).

2. Caster according to claim 1, **characterised in that** the caster housing (13) is embodied in a wedge shape.

3. Caster according to claim 1 or 2, **characterised in that** the wheel (14) is supported in the area of the tip of the wedge.

4. Wheeled vacuum cleaner with a base body (10), on the base side of which with a base surface (11) at least one caster (12) according to one of the preceding claims is disposed in a roller area, wherein the wheel is supported rotatably around an essentially horizontal axis (15) on the caster housing (13), and wherein the caster housing (13) is supported pivotably or rotatably on the base body (10) on an essentially vertical axis (16).

5. Wheeled vacuum cleaner according to claim 4, **characterised in that** the caster housing (13) has an essentially circular cross-section.

6. Wheeled vacuum cleaner according to claim 4 or 5, **characterised in that** the wheel (14) is disposed close to the circumference on a circumference of the caster housing (13).

7. Wheeled vacuum cleaner according to one of claims 4 to 6, **characterised in that** the caster housing (13) projects in a tapered shape beyond the base surface (11) in the roller area of the base body (10).

8. Wheeled vacuum cleaner according to one of claims 4 to 7, **characterised in that** the caster housing (13), when in use, forms an inclined plane with its area close to the floor, which is inclined at an angle (18) of around 20 to 30°, especially by 25°, to the base surface (11) of the base body (10) in the roller area.

9. Wheeled vacuum cleaner according to one of claims 4 to 8, **characterised in that** the wheel (14) is disposed with spacers (19, 19') in a cutout (21) of the caster housing (13).

10. Wheeled vacuum cleaner according to one of claims 4 to 9, **characterised in that** the bush (22) is connected by a force fit to the caster housing (13).

11. Wheeled vacuum cleaner according to one of claims 4 to 10, **characterised in that** the bush (22) is connected via a bearing journal (23) to the base body (10), wherein a material pairing of the bush (22) to the bearing journal (23) is designed so that friction is able to be reduced.

## Revendications

1. Roulette directrice d'un aspirateur traîneau avec un boîtier de roulette directrice (13) et une roulette (14) disposée dans le boîtier de roulette directrice (13) de façon décentrée à une partie de pourtour (20), dans laquelle la roulette (14) est montée de façon axialement rotative sur le boîtier de roulette directrice (13) et le boîtier de roulette directrice (13) présente la plus grande hauteur axiale (17) à la partie de pourtour (20) à laquelle la roulette (14) est disposée, **caractérisée en ce que** le boîtier de roulette directrice (13) est fabriqué en un métal et **en ce qu'**une tubulure séparée (22) est disposée axialement dans le boîtier de roulette directrice (13) pour la transmission de forces dans les axes de l'espace, qui sont fabriqués en une matière plastique.

2. Roulette directrice selon la revendication 1, **caractérisée en ce que** le boîtier de roulette directrice (13) est configuré en forme de coin.

3. Roulette directrice selon la revendication 1 ou 2, **caractérisée en ce que** la roulette (14) est montée dans la région de la pointe du coin.

4. Aspirateur traîneau avec un corps de base (10), dont le côté inférieur avec une face de base (11) est muni dans une région de roulement d'au moins une roulette directrice (12) selon l'une quelconque des revendications précédentes, dans lequel la roulette est agencée sur le boîtier de roulette directrice (13) de façon rotative autour d'un axe essentiellement horizontal (15) et dans lequel le boîtier de roulette directrice (13) est agencé sur le corps de base (10) de façon pivotante ou rotative autour d'un axe essentiellement vertical (16).

5. Aspirateur traîneau selon la revendication 4, **caractérisé en ce que** le boîtier de roulette directrice (13) présente une section transversale essentiellement circulaire.

6. Aspirateur traîneau selon la revendication 4 ou 5, **caractérisé en ce que** la roulette (14) est disposée à proximité du pourtour à un pourtour du boîtier de roulette directrice (13).

7. Aspirateur traîneau selon l'une quelconque des revendications 4 à 6, **caractérisé en ce que** le boîtier de roulette directrice (13) dépasse en forme de coin au-dessus de la face de base (11) dans la région de roulement du corps de base (10).

8. Aspirateur traîneau selon l'une quelconque des revendications 4 à 7, **caractérisé en ce que** le boîtier de roulette directrice (13) forme, en position d'utilisation, avec sa région proche du sol un plan oblique, qui est incliné d'un angle (18) d'environ 20 à 30°, en particulier de 25°, par rapport à la face de base (11) du corps de base (10) dans la région de roulement.

9. Aspirateur traîneau selon l'une quelconque des revendications 4 à 8, **caractérisé en ce que** la roulette (14) est disposée avec des éléments d'écartement (19, 19') dans une découpe (21) du boîtier de roulette directrice (13).

10. Aspirateur traîneau selon l'une quelconque des revendications 4 à 9, **caractérisé en ce que** la tubulure (22) est assemblée par serrage avec le boîtier de roulette directrice (13).

11. Aspirateur traîneau selon l'une quelconque des revendications 4 à 10, **caractérisé en ce que** la tubulure (22) est assemblée au corps de base (10) au moyen d'un tourillon (23), dans lequel la paire de matériaux de la tubulure (22) et du tourillon (23) est choisie de telle manière qu'un frottement puisse être réduit.
